# EUROPÄISCHE PATENTSCHRIFT

(11) **EP 1 155 428 B1**
(45) Veröffentlichungstag und Bekanntmachung des Hinweises auf die Patenterteilung: **28.08.2002**
(21) Anmeldenummer: 00914042.7
(22) Anmeldetag: 22.02.2000
(51) Int. Cl.: H01H 31/00, H01H 3/54, H01H 33/42

(54) **ANTRIEBSEINRICHTUNG FÜR EIN SCHALTGERÄT, INSBESONDERE FÜR ERDUNGSSCHALTER VON MITTELSPANNUNGS-SCHALTANLAGEN**
DRIVE DEVICE FOR A SWITCHING DEVICE, ESPECIALLY FOR EARTHING SWITCHES OF MEDIUM-VOLTAGE SWITCHGEAR
DISPOSITIF D'ENTRAINEMENT POUR UN APPAREIL DE COMMUTATION, EN PARTICULIER POUR COMMUTATEURS DE MISE A LA TERRE POUR INSTALLATIONS DE COMMUTATION MOYENNE TENSION

(30) Priorität: 24.02.1999 DE 29904223 U
(43) Veröffentlichungstag der Anmeldung: 21.11.2001
(73) Patentinhaber: SIEMENS AKTIENGESELLSCHAFT, 80333 München (DE)
(72) Erfinder: GRONEMANN, Karl-Heinz, D-63150 Heusenstamm (DE); STOLZ, Rainer, D-63477 Maintal (DE); KALETTA, Joachim, D-12355 Berlin (DE)
(86) Internationale Anmeldenummer: DE0000558
(87) Internationale Veröffentlichungsnummer: WO00051150

(56) Entgegenhaltungen:
- DE-C- 4 125 897
- DE-C- 4 210 695
- US-A- 3 801 768
- US-A- 4 555 603
- US-A- 5 382 765

## Beschreibung

Die Erfindung betrifft eine Antriebseinrichtung für ein Schaltgerät, insbesondere für Erdungsschalter von Mittelspannungs-Schaltanlagen, mit einer Hauptwelle eines Trennschalters und mit einer über eine Kuppelungseinrichtung verbindbaren Betätigungswelle eines Erdungsschalters, wobei die Betätigungswelle manuell betätigbar ist und die Längsachsen der Hauptwelle und der Betätigungswelle parallel zueinander verlaufen.

Eine Antriebseinrichtung für ein Schaltgerät der eingangs definierten Art ist durch die DE 41 25 897 C2 bekannt. Die Betätigungswelle besteht hier über eine Kuppelungseinrichtung mit der Hauptwelle des Trennschalters in Verbindung, wobei die manuell steuerbare Betätigungswelle über eine Verbindungsstange von einer externen Betätigungsvorrichtung radial verschwenkt in Erdungsstellung gebracht werden kann. Allerdigs darf aus Sicherheitsgründen die Erdstellung des Trennschalters grundsätzlich nur dann steuerbar sein, wenn sich der Trennschalter im ausgeschalteten Zustand befindet.
Die Betätigungswelle, die Hauptwelle und die Verbindungsstange der externen Betätigungsvorrichtung sind als kompakte Betätigungsmechanismen stationär für einen Trennschalter innerhalb des Schaltfeldes vorgesehen und mit den entsprechenden Antriebseinrichtungen fest verbunden.

Aus der DE 42 10 695 C1 ist ein Schaltantrieb, insbesondere für Mittelspannungs-Schalteinrichtungen bekannt, bei der die Drehbewegung der Betätigungswelle über ein Gleitkurvenelement um 90° versetzt auf eine Schaltwelle übertragen wird. Die Drehbewegung der Schaltwelle wird durch einen Bolzen bewirkt, der durch die Ausgestaltung des Gleitkurvenelements vorgegeben ist. Auch dieser Schaltantrieb ist integraler Bestandteil der Schalteinrichtung innerhalb des Schaltfeldes.
Die der Erfindung zugrundeliegende Aufgabe besteht darin, die bekannten Schaltvorgänge im Zusammenhang mit den Trennschaltern in den Ablauffolgen für Schaltgeräte so zu definieren, daß die Steuerung auch in modular strukturierten Schaltanlagen eingesetzt werden können. Selbstverständlich müssen die in dieser Technik notwendigen Sicherheitsanforderungen in Bezug auf die Verriegelungen und die Störmeldeanzeigen im vollen Umfang gewährleistet sein.
Erfindungsgemäß wird dies durch die kennzeichnenden Merkmale des Schutzanspruches 1 erreicht.

Der Erfindung liegt demnach die Erkenntnis zugrunde, die ortsgebundenen Antriebe durch ortsungebundene Antriebe zu ersetzen, und den beweglichen Teil des Antriebs konstruktiv gänzlich von dem eigentlichen Schaltgerät innerhalb des Schaltgerätes zu trennen. Damit ist erreicht, die im stationären Schaltfeld zugeordneten Bestandteile, wie die Trennund Erdungsschalter durch einen in dem fahrbaren Schaltmodul angeordneten Antrieb zu steuern. Der Aufwand in den Schaltfeldern ist dementsprechend geringer, da die zulässigen und unzulässigen Schaltfolgen in einfacher Weise durch die erfindungsgemäße Ausgestaltung der AntriebsKuppelung erreicht ist.

Der normale Betriebszustand in den Schaltfeldern ist bekanntermaßen dadurch gegeben, daß die Betätigung des Erdungsschalters im Schaltfeld nur bei Übereinstellung der Stellung der Erderwelle im Schaltfeld mit der Stellung der Modulwelle im Schaltmodul erfolgt. Bei gegenläufigen Stellungen, beispielsweise Erderwelle im Einschaltzustand und Modulwelle im Ausschaltzustand bzw. umgekehrt, entstehen kritische Betriebszustände, da im ersten Fall - im Ausschaltzustand der Modulwelle - der Trennschalter und im zweiten Fall - im Ausschaltzustand der Erderwelle - der Erdungsschalter nicht betätigt werden darf.
Unter der Festlegung, daß sich der Erdungsschalter nur mit eingefahrenem Schaltmodul betätigen läßt und das Schaltmodul nur im Ein- und Ausschaltzustand des Erdungsschalters aus dem Schaltfeld herausgefahren werden kann, sind mit der einander abhängigen räumlichen Zuordnung des Antriebsstifts der Modulwelle in Bezug auf den Eingriff in die Antriebskuppelung der Erderwelle sowie der Verriegelungsmöglichkeit des Schaltmoduls mit dem Schaltfeld nur bei ordnungsgemäßer Koppelung der Modulwelle mit der AntriebsKuppelung die geforderten Bedingungen in einfacher Weise erfüllt.

Eine vorteilhafte Ausgestaltung der Erfindung sieht die Merkmale des Schutzanspruches 2 vor.
Sobald also der Antriebsstift der Modulwelle nicht in die Mitnehmernut der AntriebsKuppelung eingreifen kann, wird die Erderwelle mit der abgesetzten Stiftanzeige über die Kontur des Schaltmoduls herausgefahren. Mit der herausgefahrenen Stiftanzeige ist dieser Zustand des Nichteingreifens des Antriebsstifts in die Mitnehmernut der AntriebsKuppelung optisch angezeigt.

Gemäß einer weiteren vorteilhaften Ausgestaltung der Erfindung sind die Merkmale des Schutzanspruches 3 vorgesehen.
Mit den Zentrierfasen sowohl an der Modulwelle des Schaltmoduls als auch an der AntriebsKuppelung des Schaltfeldes ist eine sichere Zuführung beider Komponenten auch bei geringfügigem Versatz erreicht, so daß keinerlei Beschädigungen an der Antriebskuppelung oder der Modulwelle bzw. an beiden auftreten können.

Die Erfindung wird durch ein in drei Figuren dargestelltes Ausführungsbeispiel näher erläutert, wobei die
- Figur 1: die Antriebseinrichtung im ungekoppelten Zustand zeigt, während die
- Figur 2: die kraftschlüssige Koppelung des Schaltmoduls mit dem Schaltfeld zeigt und die
- Figur 3: die Antriebseinrichtung im nicht koppelbaren Zustand abbildet.

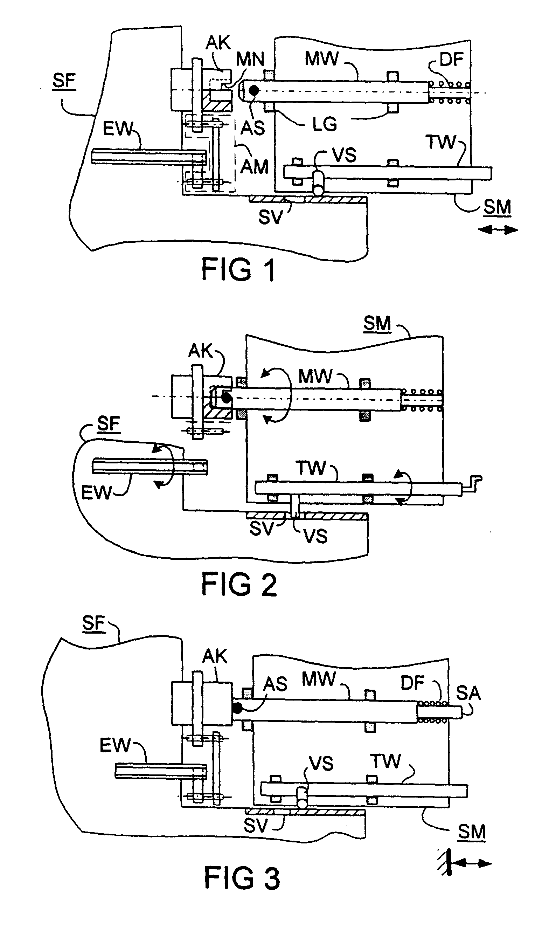

Figur 1 zeigt auszugsweise das Schaltfeld SF mit die Erderwelle EW. Die Erderwelle EW ist mit einer Antriebsmechanik AM gekoppelt, über die eine Drehbewegung von der AntriebsKuppelung AK übertragbar ist. Weiterhin ist ersichtlich, daß die AntriebsKuppelung AK mit einer Mitnehmernut MN ausgestattet ist, in die im angekoppelten Zustand der Antriebsstift AS einer Modulwelle MN des Schaltmoduls SM eingreift. Darüber hinaus ist erkennbar, daß die Modulwelle MW im Schaltmodul SM in Lagern LG drehgelagert ist und bei kraftschlüssiger Ankoppelung mit der Erderwelle EW im Bereich des Antriebsstifts AS von der AntriebssKuppelung AK aufgenommen wird. Mit dem Antriebsstift AS, der quer zur nicht bezeichneten Längsachse der Modulwelle MW angeordnet ist, wird die Drehbewegung der Modulwelle MW über die AntriebsKuppelung AK und die Antriebsmechanik AM direkt auf die Erderwelle EW im Schaltbild SF übertragen.
Desweiteren ist im Schaltmodul SM die Trennerwelle TW vorgesehen, die in dem Schaltfeld SF zugewandten Endbereich einen quer zu ihrer Längsachse vorgesehenen Verriegelungsstift VS enthält. Der Verriegelungsstift VS kann in dieser Stellung des Schaltmoduls SM nicht in den Verriegelungsschlitz VS des Schaltfeldes SF eingebracht werden, d.h., der Antrieb der Trennerwelle TW ist gesperrt.
Mit dem nicht bezeichneten Doppelpfeil ist außerdem angedeutet, daß das Schaltmodul SM entsprechend der Pfeilrichtungen verfahrbar ist.

Die Modulwelle MW ist innerhalb des Schaltmoduls SM mittels der Druckfeder DF in definierte Schaltstellung axial bewegbar.

Die Figur 2 zeigt die kraftschlüssige Koppelung des verfahrbaren Schaltmoduls SM mit dem stationär angeordneten Schaltfeld SF. Bei dieser kraftschlüssigen Koppelung greift der Antriebsstift AS (Fig.1) der Mitnehmerwelle MW des Schaltmoduls SM in die Mitnehmernut MN (Fig.1) der Antriebskuppelung AK des Schaltfeldes SF ein. In diesem Zustand ist also die Erderwelle EW des Schaltfeldes SF von der Mitnehmerwelle MW des Schaltmoduls - wie angedeutet - in beiden Pfeilrichtungen drehbar.
Gleichzeitig ist mit der Trennerwelle TW, die mit dem Verriegelungsstift VS in den Verriegelungsschlitz SV eingreifen und somit das Schaltmodul SM mit dem Schaltfeld SF verriegeln kann, der Antrieb für den nicht dargestellten Trennkontakt im Schaltfeld SF wirksam geschaltet.

Die Figur 3 zeigt die Antriebseinrichtung im nicht koppelbaren Zustand. Der Antriebsstift AS der Mitnehmerwelle MW kann nicht mit der Mitnehmernut MN (Fig.1) der Antriebskuppelung AK in Eingriff gebracht werden. Der Antrieb der Trennerwelle TW ist unwirksam und damit der nicht dargestellte Trennkontakt innerhalb des Schaltfeldes SF nicht steuerbar. Wie mit der Pfeilsymbolik angedeutet, ist das Schaltmodul SM lediglich bis zum nicht koppelbaren Zustand in das Schaltfeld SF in beiden Pfeilrichtungen verfahrbar.
Dieser Zustand wird dadurch optisch kenntlich gemacht, daß mit dem Anfahren des Antriebsstiftes AS gegen die AntriebsKuppelung AK die Modulwelle MW axial gegen die Kraft der Druckfeder DF verschoben wird und der abgesetzte Teil der Modulwelle MW als Stiftanzeige SA über die Kontur des Schaltmoduls SM herausgefahren wird.

Um den Antrieb für die Erderwelle EW innerhalb des Schaltfeldes SF wieder herstellen zu können, müssen im Schaltfeld SF selbst geeignete Maßnahmen getroffen werden, damit die AntriebsKuppelung AK im Schaltfeld SF wieder in die Eingriffsstellung mit der Modulwelle MW gemäß der Figuren 1 und 2 zu bringen.

## Patentansprüche

1. Antriebseinrichtung für ein Schaltgerät, insbesondere für Erdungsschalter von Mittelspannungs-Schaltanlagen, mit einer Hauptwelle eines Trennschalters und mit einer über eine Kuppelungseinrichtung verbindbaren Betätigungswelle (EW) eines Erdungsschsalters, wobei die Betätigungswelle manuell betätigbar ist und die Längsachsen der Hauptwelle und der Betätigungswelle parallel zueinander verlaufen,
**gekennzeichnet durch** die Merkmale
1.1 die Betätigungswelle ist **durch** eine Erderwelle (EW) in einem stationär angeordneten Schaltfeld (SF) realisiert,
1.2 die Erderwelle (EW) steht mittels einer Radialbewegungen übertragenden Antriebsmechanik (AM) mit einer die Radialbewegungen aufnehmenden AntriebsKuppelung (AK) des Schaltfeldes (SF) in Verbindung,
1.3 die Hauptwelle ist **durch** eine in einem fahrbaren Schaltmodul (SM) drehbar gelagerte Modulwelle (MW) realisiert, wobei die Längsachsen der AntriebsKuppelung (AK) und der Modulwelle (MW) deckungsgleich verlaufen,
1.4 die Modulwelle (MW) weist an ihrem zum Schaltfeld (SF) gerichteten freien Ende einen quer zu ihrer Längsachse angeordneten Antriebsstift (AS) zum Eingriff in die AntriebsKuppelung (AK) auf,
1.5 das Schaltmodul(SM) weist eine drehbar gesteuerte Trennerwelle (TW) zum Trenner- und Blendenantrieb auf,
1.6 die Trennerwelle (TW) ist im zum Schaltfeld (SF) gerichteten freien Endbereich mit einem quer zu ihrer Längsachse angeordneten Verriegelungsstift (VS) versehen, der im Zustand der Koppelung des Antriebstiftes (AS) der Modulwelle (MW) mit der AntriebsKuppelung(AK) des Schaltfeldes (SF) zur Verriegelung des Schaltmoduls (SM) mit dem Schaltfeld (SF) in einen Verriegelungsschlitz (SV) desselben eingreift.

2. Antriebseinrichtung für ein Schaltgerät nach Schutzanspruch 1,
**gekennzeichnet durch** die Merkmale
2.1 in der Antriebskuppelung (AK) ist eine Mitnehmernut (MN) derart positioniert, daß der Antriebsstift (AS) der Modulwelle (MW) nur im Zustand einer zulässigen Koppelung mit der Mitnehmernut (MN) in Eingriff zu bringen ist,
2.2 die Modulwelle (MW) ist in ihrem vom Schaltfeld (SF) abgewandten freien Endbereich mit einer Stiftanzeige (SA) versehen, die bei nicht ordnungsgemäßer Koppelung gegen die Kraft einer Druckfeder (DF) über die Begrenzungskontur des Schaltmoduls (SM) hinaus axial verschiebbar ist.

3. Antriebseinrichtung für ein Schaltgerät nach den Schutzansprüchen 1 und/oder 2,
**gekennzeichnet durch** die Merkmale
3.1 die Modulwelle (MW) ist im Eingriffsbereich mit der Antriebskuppelung (AK) mit einer ersten Zentrierfase versehen,
3.2 die AntriebsKuppelung (AK) ist im Eingriffsbereich mit der Modulwelle (MW) mit einer weiteren Zentrierfase ausgestattet.

## Claims

1. Drive device for a switching device, in particular for earthing switches for medium-voltage switchgear assemblies, having a main shaft of a switch disconnector and having an operating shaft (EW), which can be connected via a coupling device, of an earthing switch, in which case the operating shaft can be operated manually, and the longitudinal axes of the main shaft and of the operating shaft run parallel to one another,
**characterized by** the following features:
1.1 the operating shaft is in the form of an earthing device shaft (EW) in a stationary switch panel (SF),
1.2 the earthing device shaft (EW) is connected by means of a drive mechanism (AM), which transmits radial movements, to a drive coupling (AK), which accommodates the radial movements, of the switch panel (SF),
1.3 the main shaft is in the form of a module shaft (MW) which is mounted in a movable switching module (SM) such that it can rotate, with the longitudinal axes of the drive coupling (AK) and of the module shaft (MW) running such that they are superimposed,
1.4 at its free end pointing towards the switch panel (SF), the module shaft (MW) has a drive pin (AS), which is arranged transversely with respect to its longitudinal axis, for engaging in the drive coupling (AK),
1.5 the switching module (SM) has a disconnector shaft (TW), which is controlled such that it can rotate, for the disconnector and cover drive,
1.6 the disconnector shaft (TW) is provided in the free end region pointing towards the switch panel (SF) with an interlock pin (VS) which is arranged transversely with respect to its longitudinal axis and, when the drive pin (AS) on the module shaft (MW) is coupled to the drive coupling (AK) of the switch panel (SF), engages in an interlock slot (SV) in the switch panel (SF) in order to lock the switching module (SM) to the switch panel (SF).

2. Drive device for a switching device according to Patent Claim 1,
**characterized by** the following features:
2.1 a driver groove (MN) is positioned in the drive coupling (AK) in such a manner that the drive pin (AS) on the module shaft (MW) can be engaged with the driver groove (MN) only in a permissible coupling state,
2.2 in its free end region facing away from the switch panel (SF), the module shaft (MW) is provided with a pin indication (SA) which, when not in the correctly coupled state, can be moved axially against the force of a compression spring (DF) beyond the boundary contour of the switching module (SM).

3. Drive device for a switching device according to Patent Claims 1 and/or 2,
**characterized by** the following features
3.1 in the engagement region with the drive coupling (AK), the module shaft (MW) is provided with a first centring chamfer,
3.2 in the engagement region with the module shaft (MW), the drive coupling (AK) is equipped with a further centring chamfer.

## Revendications

1. Dispositif d'entraînement pour un appareil de commutation, en particulier pour commutateurs de mise à la terre d'installations de commutation moyenne tension, ayant un arbre principal d'un sectionneur et un arbre (EW) de commande d'un commutateur de mise à la terre pouvant être relié à un dispositif d'accouplement, l'arbre de commande pouvant être actionné manuellement et les axes longitudinaux de l'arbre principal et de l'arbre de commande s'étendant parallèlement entre eux,
**caractérisé par** les caractéristiques :
1.1 l'arbre de commande est réalisé par un arbre (EW) de terre dans un panneau (SF) de couplage stationnaire,
1.2 l'arbre (EW) de terre est relié, au moyen d'une mécanique (AM) d'entraînement transmettant des déplacements radiaux, à un accouplement (AK) d'entraînement du panneau (SF) de couplage absorbant les déplacements radiaux,
1.3 l'arbre principal est réalisé par un arbre (MW) de module monté tournant dans un module (SM) de commutation mobile, les axes longitudinaux de l'accouplement (AK) d'entraînement et de l'arbre (MW) de module étant en coïncidence,
1.4 l'arbre (MW) de module présente, à son extrémité libre dirigée vers le panneau (SF) de couplage, une pointe (AS) d'entraînement disposée transversalement à l'axe longitudinal de l'arbre et destinée à s'engager dans l'accouplement (AK) d'entraînement,
1.5 le module (SM) de commutation présente un arbre (TW) de sectionneur commandé en rotation, pour l'entraînement du sectionneur et de la sécurité,
1.6 l'arbre (TW) de sectionneur est, dans la région d'extrémité libre dirigée vers le panneau (SF) de couplage, équipé d'une goupille (VS) de verrouillage disposée transversalement à l'axe longitudinal de l'arbre, laquelle goupille, lorsque la pointe (AS) d'entraînement de l'arbre (MW) de module est couplée avec l'accouplement (AK) d'entraînement du panneau (SF) de couplage, pénètre dans une fente (SV) de verrouillage, aux fins de verrouiller le module (SM) de commutation avec le panneau (SF) de couplage.

2. Dispositif d'entraînement pour un appareil de commutation selon la revendication 1,
**caractérisé par** les caractéristiques :
2.1 dans l'accouplement (AK) d'entraînement, une encoche (MN) d'entraînement est positionnée de telle sorte que la pointe (AS) d'entraînement de l'arbr (MW) de module ne peut s'engager dans l'encoch (MN) d'entraînement que dans le cas d'un couplage admissible,
2.2 l'arbre (MW) de module est, dans sa région d'extrémité libre tournée à l'opposé du panneau (SF) de couplage, équipé d'un indicateur (SA) de pointe qui, en cas de couplage incorrect, peut se déplacer dans la direction axiale au-delà du contour de limitation du module (SM) de commutation, à l'encontre de la force d'un ressort (DF) de pression.

3. Dispositif d'entraînement pour un appareil de commutation selon les revendications 1 et/ou 2,
**caractérisé par** les caractéristiques :
3.1 l'arbre (MW) de module, dans la zone d'engagement avec l'accouplement (AK) d'entraînement, est équipé d'un premier biseau de centrage,
3.2 l'accouplement (AK) d'entraînement, dans la zone d'engagement avec l'arbre (MW) de module, est équipé d'un autre biseau de centrage.
